# EUROPEAN PATENT APPLICATION

(11) **EP 4 745 715 A1**
(43) Date of publication of application: **20.05.2026**
(21) Application number: 25846084.9
(22) Date of filing: 10.07.2025
(51) Int. Cl.: G06F 1/16, G06F 3/01, C09J 7/00

(54) **WEARABLE ELECTRONIC DEVICE INCLUDING CONDUCTIVE PATTERN**

(30) Priority: 24.09.2024 KR 20240128686; 10.10.2024 KR 20240137473
(60) Divisional application: 26158208.4
(71) Applicant: Samsung Electronics Co., Ltd, Suwon-si, Gyeonggi-do 16677 (KR)
(72) Inventor: KIM, Kyeongmin, Suwon-si, Gyeonggi-do 16677 (KR)
(74) Representative: Gulde & Partner
(86) International application number: PCT/KR2025/010109
(87) International publication number: WO 2026/071423

(57) **Abstract**

A wearable electronic device may include a housing having a ring shape, a first non-conductive portion formed on a first surface of the housing, a first substrate disposed at a position corresponding to the first non-conductive portion in an internal space of the housing, a first portion, a connecting portion, and a second portion that form the first substrate, a wireless communication circuit disposed on the first portion, and an antenna pattern disposed on the second portion. The second portion may be bent through the connecting portion and may be disposed on the wireless communication circuit.

## Description

### [Technical Field]

Various embodiments of the disclosure disclose a wearable electronic device including at least one conductive pattern.

### [Background Art]

Usage of electronic devices such as bar-type, foldable-type, rollable-type, sliding-type, or wearable-type devices is increasing, and various functions are being provided to such electronic devices.

Such electronic devices have been evolving into forms of wearable electronic devices for portability and accessibility.

For example, the wearable electronic devices may include forms such as watches, glasses, bracelets, or rings that can be worn on a portion of a user's body.

The above-described information may be provided as related art for the purpose of helping to understand the disclosure. No claim or determination is made regarding whether any of the foregoing may be applied as prior art with respect to the disclosure.

### [Disclosure of Invention]

### [Technical Problem]

A wearable electronic device (e.g., a smart ring) that can be worn on a user's finger may perform various operations in conjunction with another electronic device (e.g., a portable electronic device and/or a home appliance).

The wearable electronic device may include at least one conductive pattern (e.g., an antenna pattern and/or a sensing pattern) to exchange various data with another electronic device. For example, the conductive pattern may be partially bent or curved to correspond to the outer shape of the ring-shaped wearable electronic device.

For example, the wearable electronic device may electrically connect the conductive pattern and a substrate (e.g., a printed circuit board (PCB)) by using a connector such as a C-clip.

For example, when the conductive pattern is curved to correspond to the outer shape of the ring-shaped wearable electronic device, a contact with the C-clip may not be properly formed.

For example, when the conductive pattern and the substrate are electrically connected by using the C-clip, the thickness of the wearable electronic device (e.g., a smart ring) may increase due to the height of the C-clip, and the space for arranging other electronic components on the substrate may be reduced due to the placement area of the C-clip.

Various embodiments of the disclosure may provide a wearable electronic device capable of accommodating at least one conductive pattern (e.g., an antenna pattern and/or a sensing pattern) inside a housing by modifying a structure of a substrate.

The technical problems to be addressed by this disclosure are not limited to those described above, and other technical problems not mentioned above may be clearly understood by a person ordinarily skilled in the related art to which the disclosure pertains.

### [Solution to Problem]

According to an embodiment of the disclosure, a wearable electronic device may include a housing having a ring shape and a first non-conductive portion formed on a first surface of the housing. According to an embodiment, the wearable electronic device may include a first substrate disposed at a position corresponding to the first non-conductive portion in an internal space of the housing. According to an embodiment, the first substrate may include a first portion, a connecting portion, and a second portion. According to an embodiment, the wearable electronic device may include a wireless communication circuit disposed on the first portion and an antenna pattern disposed on the second portion. According to an embodiment, the second portion may be bent through the connecting portion and may be disposed on the wireless communication circuit.

### [Advantageous Effects of Invention]

According to various embodiments of the disclosure, by arranging at least one conductive pattern (e.g., an antenna pattern and/or a sensing pattern) inside a housing using a modified structure of a substrate, a contact between the conductive pattern and the substrate may be improved, and the thickness of the wearable electronic device may be reduced.

In addition, various effects that are directly or indirectly identified through the disclosure may be provided.

### [Brief Description of Drawings]

In connection with the description of the drawings, the same or similar components may be denoted by the same or similar reference numerals.
FIG. 1A is a block diagram of an electronic device according to various embodiments of the disclosure in a network environment.
FIG. 1B is a block diagram of a wireless communication module, a power management module, and an antenna module of an electronic device according to various embodiments of the disclosure.
FIG. 2 is a perspective view schematically illustrating a wearable electronic device according to an embodiment of the disclosure.
FIG. 3 is a cross-sectional view schematically illustrating a wearable electronic device according to an embodiment of the disclosure.
FIG. 4 is an enlarged view schematically illustrating portion A of the wearable electronic device illustrated in FIG. 3 according to an embodiment of the disclosure.
FIG. 5 is an enlarged view schematically illustrating portion B of the wearable electronic device illustrated in FIG. 3 according to an embodiment of the disclosure.
FIG. 6 is an enlarged view schematically illustrating portion C of the wearable electronic device illustrated in FIG. 3 according to an embodiment of the disclosure.
FIG. 7 is a view schematically illustrating an example in which the first to third substrates are bent in a first direction when a portion of the wearable electronic device illustrated in FIG. 3 is unfolded, according to an embodiment of the disclosure.
FIG. 8 is a view schematically illustrating an example in which a portion of the wearable electronic device illustrated in FIG. 3 is unfolded and the first to third substrates are bent in a first direction or a second direction, according to an embodiment of the disclosure.
FIG. 9 is a view schematically illustrating a state in which the first substrate to the third substrate are bent, according to an embodiment of the disclosure.
FIG. 10 is an enlarged view schematically illustrating a portion of a wearable electronic device according to various embodiments of the disclosure.

### [Mode for the Invention]

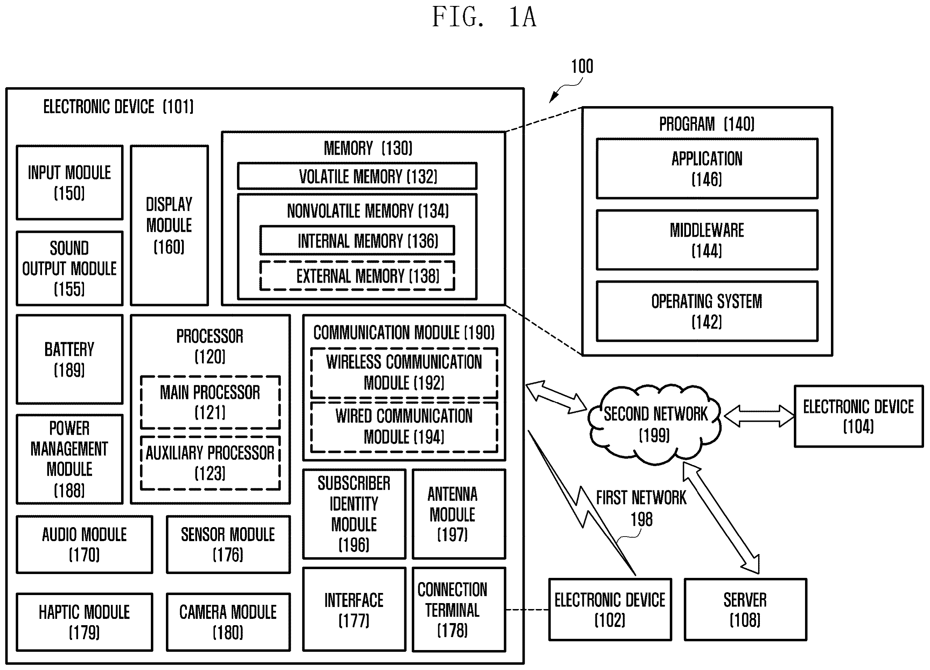

FIG. 1A is a block diagram illustrating an electronic device 101 in a network environment 100 according to various embodiments.

Referring to FIG. 1A, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

According to various embodiments, the interface (177) may electrically or operatively connect components in the electronic device (101). For example, the interface (177) may include a mobile industry processor interface (MIPI), a universal flash storage (UFS) interface, or a peripheral component interconnect express (PCIE) interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

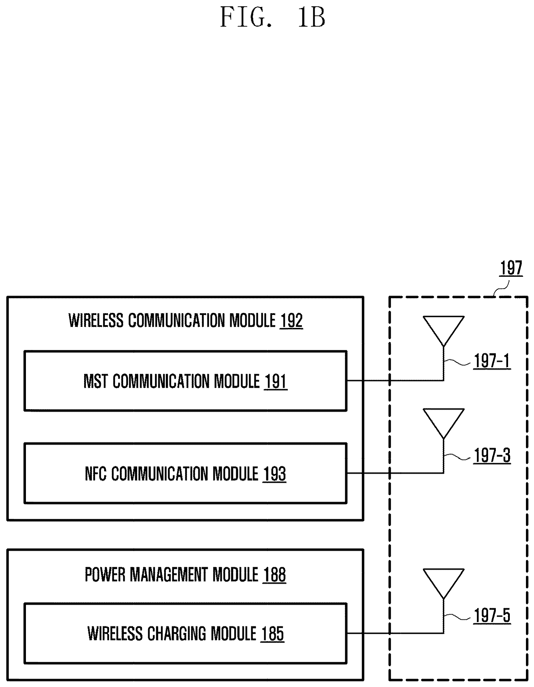

Fig. 1B is a block diagram illustrating the wireless communication module, the power management module, and the antenna module of the electronic device according to various embodiments.

Referring to Fig. 1B, the wireless communication module 192 may include a magnetic secure transmission (MST) communication module 191 or a near-field communication (NFC) module 193, and the power management module 188 may include a wireless charging module 185. In such a case, the antenna module 197 may include a plurality of antennas that include a MST antenna 197-1 connected with the MST communication module 191, a NFC antenna 197-3 connected with the NFC communication module 193, and a wireless charging antenna 197-5 connected with the wireless charging module 185. For ease of description, the same components as those described in regard to Fig. 1A are briefly described or omitted from the description.

The MST communication module 191 may receive a signal containing control information or payment information such as card information from the processor 120, generate a magnetic signal corresponding to the received signal, and then transfer the generated magnetic signal to the external electronic device 102 (e.g., a point-of-sale (POS) device) via the MST antenna 197-1. To generate the magnetic signal, according to an embodiment, the MST communication module 191 may include a switching module (not shown) that includes one or more switches connected with the MST antenna 197-1, and control the switching module to change the direction of voltage or current supplied to the MST antenna 197-1 according to the received signal. The change of the direction of the voltage or current allows the direction of the magnetic signal (e.g., a magnetic field) emitted from the MST antenna 197-1 to change accordingly. If detected at the external electronic device 102, the magnetic signal with its direction changing may cause an effect (e.g., a waveform) similar to that of a magnetic field that is generated when a magnetic card corresponding to the card information associated with the received signal is swiped through a card reader of the electronic device 102. According to an embodiment, for example, payment-related information and a control signal that are received by the electronic device 102 in the form of the magnetic signal may be further transmitted to an external server 108 (e.g., a payment server) via the network 199.

The NFC communication module 193 may obtain a signal containing control information or payment information such as card information from the processor 120 and transmit the obtained signal to the external electronic device 102 via the NFC antenna 197-3. According to an embodiment, the NFC communication module 193 may receive such a signal transmitted from the external electronic device 102 via the NFC antenna 197-3.

The wireless charging module 185 may wirelessly transmit power to the external electronic device 102 (e.g., a cellular phone or wearable device) via the wireless charging antenna 197-5, or wirelessly receive power from the external electronic device 102 (e.g., a wireless charging device). The wireless charging module 185 may support one or more of various wireless charging schemes including, for example, a magnetic resonance scheme or a magnetic induction scheme.

According to an embodiment, some of the MST antenna 197-1, the NFC antenna 197-3, or the wireless charging antenna 197-5 may share at least part of their radiators. For example, the radiator of the MST antenna 197-1 may be used as the radiator of the NFC antenna 197-3 or the wireless charging antenna 197-5, or vice versa. In such a case, the antenna module 197 may include a switching circuit (not shown) adapted to selectively connect (e.g., close) or disconnect (e.g. open) at least part of the antennas 197-1, 197-3, or 197-5, for example, under the control of the wireless communication module 192 (e.g., the MST communication module 191 or the NFC communication module 193) or the power management module (e.g., the wireless charging module 185). For example, when the electronic device 101 uses a wireless charging function, the NFC communication module 193 or the wireless charging module 195 may control the switching circuit to temporarily disconnect at least one portion of the radiators shared by the NFC antenna 197-3 and the wireless charging antenna 197-5 from the NFC antenna 197-3 and to connect the at least one portion of the radiators with the wireless charging antenna 197-5.

According to an embodiment, at least one function of the MST communication module 191, the NFC communication module 193, or the wireless charging module 185 may be controlled by an external processor (e.g., the processor 120). According to an embodiment, at least one specified function (e.g., a payment function) of the MST communication module 191 or the NFC communication module 193 may be performed in a trusted execution environment (TEE). According to an embodiment, the TEE may form an execution environment in which, for example, at least some designated area of the memory 130 is allocated to be used for performing a function (e.g., a financial transaction or personal information-related function) that requires a relatively high level of security. In such a case, access to the at least some designated area of the memory 130 may be restrictively permitted, for example, according to an entity accessing thereto or an application being executed in the TEE.

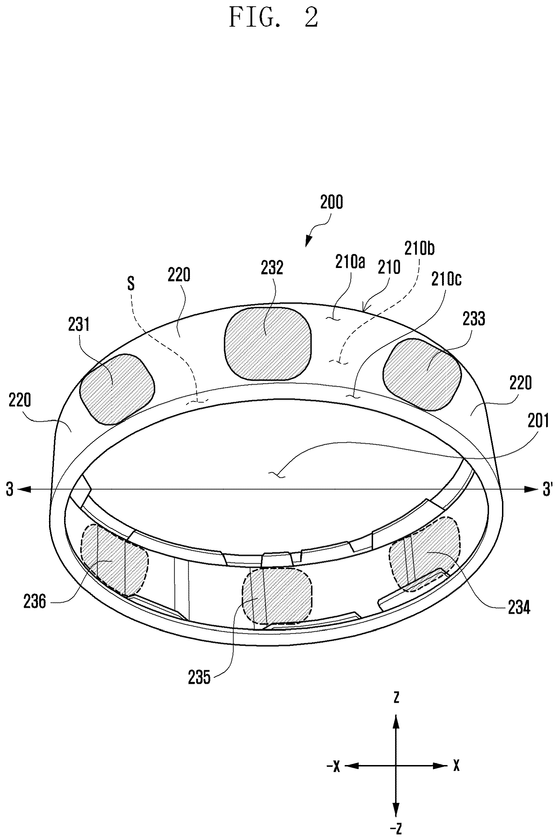

FIG. 2 is a perspective view schematically illustrating a wearable electronic device according to an embodiment of the disclosure.

According to an embodiment, the wearable electronic device 200 described below may include the electronic device 101 illustrated in FIG. 1A. For example, the wearable electronic device 200 may include at least some of the components and embodiments of the electronic device 101 illustrated in FIG. 1A.

According to an embodiment, the wearable electronic device 200 according to an embodiment of the disclosure may include an electronic device in the form of a ring (e.g., a smart ring) that can be worn on a user's finger. According to various embodiments, the wearable electronic device 200 of the disclosure is not limited to the above example and may be substantially equally applied to a bracelet-type device that can be worn on a user's wrist. According to various embodiments, the wearable electronic device 200 of the disclosure may also be substantially equally applied to various types of electronic devices that can be worn on a user's body.

Referring to FIG. 2, the wearable electronic device 200 (e.g., the electronic device 101 of FIG. 1A) according to an embodiment of the disclosure may include a housing 210.

According to an embodiment, the housing 210 may have a ring shape. For example, the housing 210 may include an opening 201. The wearable electronic device 200 may be worn on a user's finger through the opening 201. For example, the opening 201 may be a hole through which a user fits the wearable electronic device 200 onto the finger. For example, the opening 201 may be formed in a size corresponding to the thickness of the user's finger.

According to an embodiment, the housing 210 may include a first surface 210a, a second surface 210b, and a side surface 210c surrounding a space S (e.g., an internal space) between the first surface 210a and the second surface 210b. For example, the first surface 210a, the second surface 210b, and the side surface 210c may be integrally formed to constitute the housing 210 having a ring shape (e.g., an annular shape). For example, when the wearable electronic device 200 is worn on the user's finger through the opening 201, the first surface 210a may be a portion of the housing 210 exposed to the outside, and the second surface 210b may be a portion of the housing 210 that is in contact with the finger inside the housing 210. For example, the first surface 210a may be an outer surface, an outer side, an outer circumferential surface, or an outer periphery of the housing 210. For example, the second surface 210b may be an inner surface, an inner side, an inner circumferential surface, or an inner periphery of the housing 210.

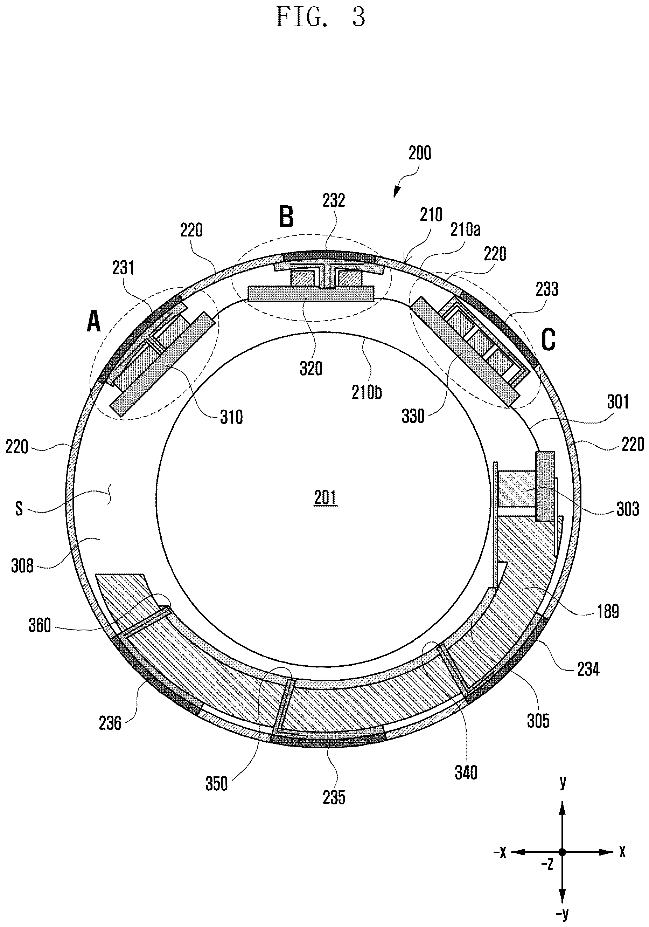

According to an embodiment, the housing 210 may include a conductive portion 220 and/or non-conductive portions 231, 232, 233, 234, 235, and/or 236. For example, the first surface 210a of the housing 210 may include the conductive portion 220 and/or at least some of the non-conductive portions 231, 232, 233, 234, 235, and/or 236. For example, the first surface 210a of the housing 210 may include at least one of a first non-conductive portion 231, a second non-conductive portion 232, a third non-conductive portion 233, a fourth non-conductive portion 234, a fifth non-conductive portion 235, and a sixth non-conductive portion 236, which are formed of a non-conductive material (e.g., a polymer) on at least a portion of the conductive portion 220. For example, a conductive portion 220 may be disposed among the first non-conductive portion 231, the second non-conductive portion 232, the third non-conductive portion 233, the fourth non-conductive portion 234, the fifth non-conductive portion 235, and the sixth non-conductive portion 236 formed on the first surface 210a of the housing 210. For example, the second surface 210b and/or the side surface 210c of the housing 210 may be formed of a non-conductive material (e.g., a polymer). For example, the second surface 210b and/or the side surface 210c of the housing 210 may also be formed of a conductive material (e.g., a metal). For example, a space S (e.g., an internal space) between the first surface 210a and the second surface 210b of the housing 210 may be filled with a non-conductive molded body (e.g., the non-conductive molded body 308 of FIG. 3 (e.g., a polymer).

FIG. 3 is a cross-sectional view schematically illustrating a wearable electronic device according to an embodiment of the disclosure.

According to an embodiment, FIG. 3 may be a view of a cross-section taken along line 3-3' of the wearable electronic device 200 according to an embodiment of the disclosure illustrated in FIG. 2, as viewed in the -z-axis direction.

According to an embodiment, the wearable electronic device 200 according to an embodiment of the disclosure may include at least one substrate 310, 320, 330, 340, 350, and/or 360, a connecting member 301, a connector 303, a wireless-charging antenna 305, a battery 189, and/or a non-conductive molded body 308 disposed in a space S (e.g., the internal space of the housing 210) between the first surface 210a (e.g., an outer periphery) and the second surface 210b (e.g., an inner periphery) of the housing 210.

According to an embodiment, the at least one substrate may include a first substrate 310, a second substrate 320, a third substrate 330, a fourth substrate 340, a fifth substrate 350, and/or a sixth substrate 360. For example, the first substrate 310 may be disposed at a position corresponding to the first non-conductive portion 231 formed on the first surface 210a of the housing 210. For example, the second substrate 320 may be disposed at a position corresponding to the second non-conductive portion 232 formed on the first surface 210a of the housing 210. For example, the third substrate 330 may be disposed at a position corresponding to the third non-conductive portion 233 formed on the first surface 210a of the housing 210. For example, the fourth substrate 340 may be disposed at a position corresponding to the fourth non-conductive portion 234 formed on the first surface 210a of the housing 210. For example, the fifth substrate 350 may be disposed at a position corresponding to the fifth non-conductive portion 235 formed on the first surface 210a of the housing 210. For example, the sixth substrate 360 may be disposed at a position corresponding to the sixth non-conductive portion 236 formed on the first surface 210a of the housing 210. In an embodiment, although the at least one substrate is described as including a first substrate 310, a second substrate 320, a third substrate 330, a fourth substrate 340, a fifth substrate 350, and/or a sixth substrate 360, it is not limited thereto and may further include additional substrates.

According to an embodiment, each of the first substrate 310, the second substrate 320, the third substrate 330, the fourth substrate 340, the fifth substrate 350, or the sixth substrate 360 may include a structure in which multiple printed circuit boards are stacked. For example, each of the first substrate 310, the second substrate 320, the third substrate 330, the fourth substrate 340, the fifth substrate 350, or the sixth substrate 360 may include an interposer structure. For example, each of the first substrate 310, the second substrate 320, the third substrate 330, the fourth substrate 340, the fifth substrate 350, or the sixth substrate 360 may be configured in the form of a flexible printed circuit board (FPCB), a rigid printed circuit board (rigid PCB), and/or a rigid-flexible printed circuit board (RF PCB).

According to an embodiment, the connecting member 301 may electrically connect the first substrate 310, the second substrate 320, the third substrate 330, the fourth substrate 340, the fifth substrate 350, and/or the sixth substrate 360. For example, the connecting member 301 may include a flexible printed circuit board (FPCB) and/or a coaxial cable.

According to an embodiment, the connector 303 may electrically connect the connecting member 301, the wireless-charging antenna 305, and the battery 189. For example, the connector 303 may be any one of a board-to-board (B2B) connector, a zero-insertion-force (ZIF) connector, a micro-joint connector, a flat flexible cable (FFC), a flexible printed circuit (FPC), or a conductive connection member.

According to an embodiment, the wireless-charging antenna 305 may charge the wearable electronic device 200. For example, the wireless-charging antenna 305 may include a shape in which a wire (e.g., a conductive pattern) is wound in a spiral form on an FPCB. For example, the wireless-charging antenna 305 may have a curved structure corresponding to the shape of the housing 210. For example, the wireless-charging antenna 305 may wirelessly receive power from an external electronic device (e.g., the external electronic devices 102 and 104 of FIG. 1A or a charging device).

According to an embodiment, the battery 189 may supply power to at least one component of the wearable electronic device 200. For example, the battery 189 may supply power to at least one substrate 310, 320, 330, 340, 350, and/or 360 through the connecting member 301 and the connector 303. For example, the battery 189 may supply power to a wireless communication circuit (radio frequency integrated circuit) and/or a sensing circuit (IC) disposed on at least one substrate 310, 320, 330, 340, 350, and/or 360. For example, the battery 189 may have a curved structure corresponding to the shape of the housing 210. For example, the battery 189 may be disposed below the wireless-charging antenna 305 (e.g., in the -y-axis direction). According to various embodiments, the wireless-charging antenna 305 may be disposed below the battery 189 (e.g., in the -y-axis direction). For example, the wireless-charging antenna 305 may be disposed between the first surface 210a of the housing 210 and the battery 189.

According to an embodiment, the inside of the housing 210 may be filled with the non-conductive molded body 308. For example, the space S (e.g., the internal space of the housing) between the first surface 210a and the second surface 210b of the housing 210 may be filled with the non-conductive molded body 308.

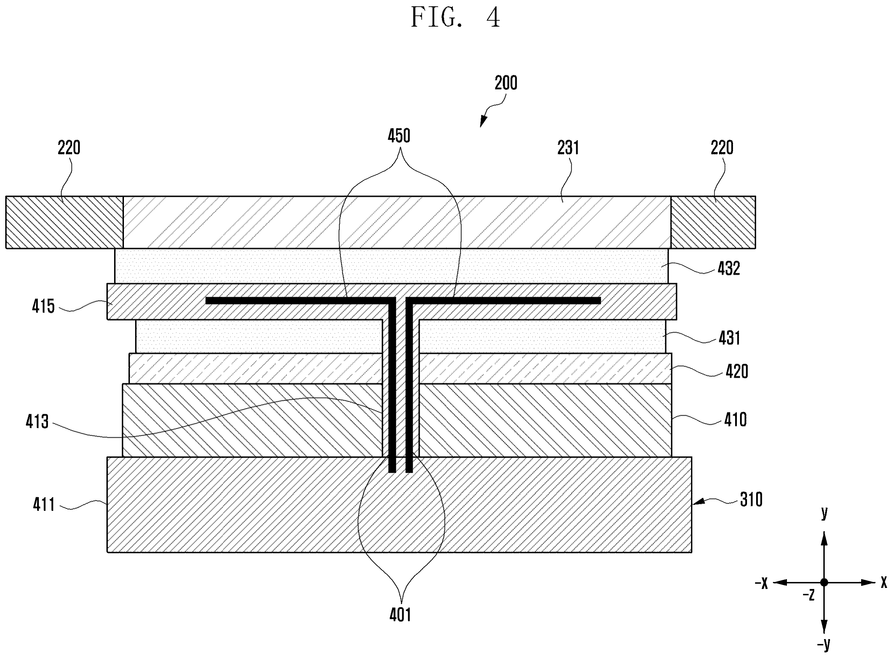

FIG. 4 is an enlarged view schematically illustrating portion A of the wearable electronic device illustrated in FIG. 3 according to an embodiment of the disclosure.

According to an embodiment, the first substrate 310 of the wearable electronic device 200 may be disposed at a position corresponding to the first non-conductive portion 231 formed on the first surface 210a of the housing 210. For example, the first substrate 310 may include a flexible substrate (e.g., a flexible printed circuit board), a rigid substrate (e.g., a rigid PCB), and/or a rigid-flex substrate (e.g., an RF PCB).

According to an embodiment, a wireless communication circuit 410, a shielding member 420, a first adhesive member 431, and/or a second adhesive member 432 may be disposed between the first substrate 310 and the first non-conductive portion 231. According to various embodiments, the second adhesive member 432 may be selectively used or omitted.

According to an embodiment, the first substrate 310 may include a first portion 411, a connecting portion 413, and a second portion 415. The first portion 411, the connecting portion 413, and the second portion 415 may form the first substrate 310. A first surface (e.g., an upper surface in a first direction or a y-axis direction) of the first portion 411 may have the wireless communication circuit 410 disposed thereon. The connecting portion 413 may integrally connect the first portion 411 and the second portion 415. The connecting portion 413 may have a predetermined length in a direction perpendicular to the first portion 411 (e.g., the y-axis direction). The connecting portion 413 may include a first wire 401 (e.g., a first signal line). The first wire 401 may include at least one conductive line. For example, the connecting portion 413 may form a bending portion or a folding portion. The first substrate 310 may be bent or folded such that the second portion 415 is bent or folded onto the first portion 411 through the connecting portion 413. When the first substrate 310 is bent through the connecting portion 413, the second portion 415 may be disposed on the first portion 411. For example, the first portion 411 of the first substrate 310 may be formed of a rigid substrate (e.g., a rigid PCB), and the connecting portion 413 and/or the second portion 415 may be formed of a flexible substrate (e.g., a flexible printed circuit board). The second portion 415 may be bent in a direction perpendicular to the connecting portion 413 (e.g., in the z-axis direction). For example, the first portion 411 of the first substrate 310, the connecting portion 413, and the second portion 415 of the first substrate 310 may be bent to have a " 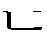 "-shaped structure. For example, the second portion 415 may be curved through the connecting portion 413 and may face the first portion 411. For example, the second portion 415 may be at least partially curved to correspond to the ring-shaped housing 210 and may face the first non-conductive portion 231. The second portion 415 may include an antenna pattern 450 (e.g., a conductive pattern). The antenna pattern 450 disposed on the second portion 415 may transmit and receive wireless signals through the first non-conductive portion 231 formed on the first surface 210a of the housing 210. For example, the antenna pattern 450 may be formed in at least one layer. The antenna pattern 450 may be electrically connected to the wireless communication circuit 410 and the first portion 411 via a first wire 401 formed in the connecting portion 413. For example, expressions related to "bending" used herein may include meanings such as "folding" or "curving."

According to an embodiment, the wireless communication circuit 410 (e.g., a radio frequency integrated circuit) may be disposed between the first portion 411 and the second portion 415 of the first substrate 310. The wireless communication circuit 410 may be disposed on the first surface (e.g., the upper surface in the first direction or the y-axis direction) of the first portion 411 of the first substrate 310. For example, when the second portion 415 of the first substrate 310 is bent from the first portion 411 through the connecting portion 413, the second portion 415 may be disposed above the wireless communication circuit 410 (e.g., in the y-axis direction). The wireless communication circuit 410 may supply a wireless signal and/or a feeding signal to the antenna pattern 450 (e.g., a conductive pattern or antenna radiator) disposed on the second portion 415 of the first substrate 310. The wireless communication circuit 410 may perform wireless communication with an external electronic device (e.g., the external electronic devices 102 and 104 of FIG. 1A) using the antenna pattern 450. For example, the wearable electronic device 200 may perform at least one of near-field communication (NFC), Bluetooth, Bluetooth low energy (BLE), Wi-Fi direct, and/or ultra-wide band (UWB) communication with an external electronic device (e.g., the external electronic devices 102 and 104 of FIG. 1A) using the wireless communication circuit 410 and the antenna pattern 450. For example, the wireless communication circuit 410 may include the wireless communication module 192 illustrated in FIG. 1A. For example, the wireless communication circuit 410 may perform substantially the same functions and operations as the wireless communication module 192 illustrated in FIG. 1A.

According to an embodiment, the shielding member 420 may be disposed on the first surface (e.g., the upper surface in the first direction or the y-axis direction) of the wireless communication circuit 410. The shielding member 420 may shield noise and/or electromagnetic interference generated from the wireless communication circuit 410. For example, the shielding member 420 may absorb noise and/or electromagnetic interference generated from the wireless communication circuit 410. For example, the shielding member 420 may include a conductive plate.

According to an embodiment, the first adhesive member 431 may be disposed between the second portion 415 of the first substrate 310 and the shielding member 420. The first adhesive member 431 may bond the second portion 415 of the first substrate 310 and the shielding member 420 to each other. The first adhesive member 431 may include a double-sided adhesive tape, a fixing poron, an adhesive resin, or an adhesive (e.g., bond). For example, the first adhesive member 431 may have a thickness ranging from about 0.03 mm to about 0.07 mm. For example, the first adhesive member 431 may be formed between the second portion 415 and the shielding member 420 with a thickness ranging from about 0.03 mm to about 0.07 mm.

According to an embodiment, the second adhesive member 432 may be disposed between the second portion 415 of the first substrate 310 and the first non-conductive portion 231. The second adhesive member 432 may bond the second portion 415 of the first substrate 310 and the first non-conductive portion 231 to each other. The second adhesive member 432 may include a transparent molded material, a double-sided adhesive tape, a fixing poron, an adhesive resin, or an adhesive (e.g., bond). For example, the second adhesive member 432 may have a thickness ranging from about 0.03 mm to about 0.07 mm. For example, the second adhesive member 432 may be formed between the second portion 415 and the first non-conductive portion 231 with a thickness ranging from about 0.03 mm to about 0.07 mm. According to various embodiments, the second adhesive member 432 may be selectively used or omitted. For example, when the second adhesive member 432 is omitted, an air gap may be formed between the second portion 415 of the first substrate 310 and the first non-conductive portion 231.

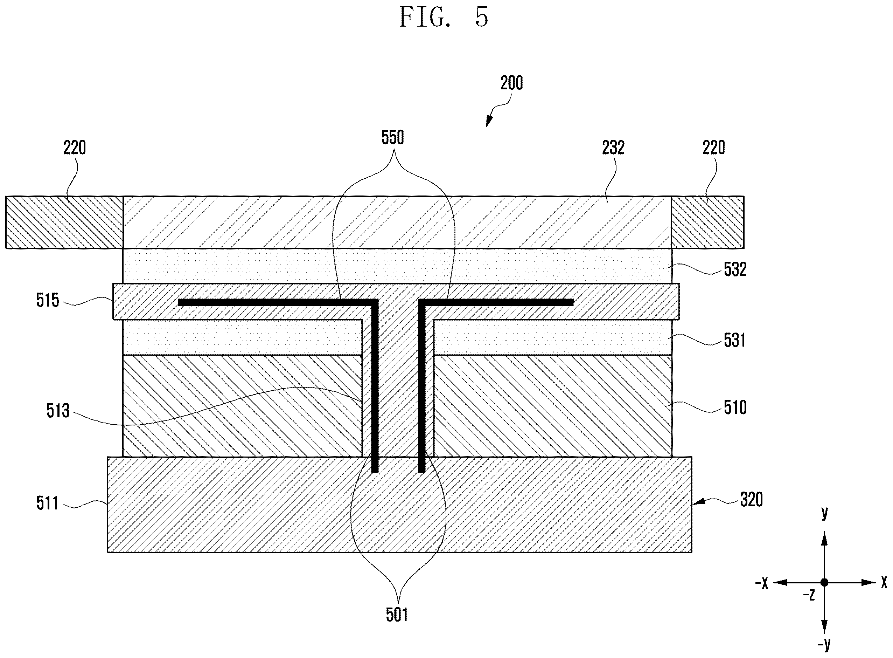

FIG. 5 is an enlarged view schematically illustrating portion B of the wearable electronic device illustrated in FIG. 3 according to an embodiment of the disclosure.

According to an embodiment, the second substrate 320 of the wearable electronic device 200 may be disposed at a position corresponding to the second non-conductive portion 232 formed on the first surface 210a of the housing 210. For example, the second substrate 320 may include a flexible substrate (e.g., a flexible printed circuit board), a rigid substrate (e.g., a rigid PCB), and/or a rigid-flexible substrate (e.g., an RF PCB).

According to an embodiment, a sensing circuit 510, a third adhesive member 531, and/or a fourth adhesive member 532 may be disposed between the second substrate 320 and the second non-conductive portion 232. According to various embodiments, the fourth adhesive member 532 may be selectively used or omitted.

According to an embodiment, the second substrate 320 may include a first portion 511, a connecting portion 513, and a second portion 515. The sensing circuit 510 may be disposed on the first surface (e.g., the upper surface in the first direction or the y-axis direction) of the first portion 511. The connecting portion 513 may integrally connect the first portion 511 and the second portion 515. The connecting portion 513 may have a predetermined length in a direction perpendicular to the first portion 511 (e.g., the y-axis direction). The connecting portion 513 may include a second wire 501 (e.g., a second signal line). For example, the second wire 501 may include at least one conductive line. For example, the connecting portion 513 may form a bending portion or a folding portion. The second substrate 320 may be bent such that the second portion 515 is bent onto the first portion 511 through the connecting portion 513. When the second substrate 320 is bent through the connecting portion 513, the second portion 515 may be disposed on the first portion 511. For example, the first portion 511 of the second substrate 320 may be formed of a rigid substrate (e.g., a rigid PCB), and the connecting portion 513 and/or the second portion 515 may be formed of a flexible substrate (e.g., a flexible printed circuit board). The second portion 515 may be bent in a direction perpendicular to the connecting portion 513 (e.g., in the z-axis direction). For example, the first portion 511 of the second substrate 320, the connecting portion 513, and the second portion 515 of the second substrate 320 may be bent to have a " 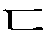 "-shaped structure. For example, the second portion 515 may be bent through the connecting portion 513 and may face the first portion 511. For example, the second portion 515 may be at least partially bent to correspond to the ring-shaped housing 210 and may face the second non-conductive portion 232. According to an embodiment, the second portion 515 may include a sensing pattern 550 (e.g., a first sensing pattern, a conductive pattern, or a touch pattern). The sensing pattern 550 disposed on the second portion 515 may sense and/or detect a touch or swipe operation input through the second non-conductive portion 232 formed on the first surface 210a of the housing 210. For example, the sensing pattern 550 may be formed in at least one layer. The sensing pattern 550 may be electrically connected to the sensing circuit 510 and the first portion 511 via a second wire 501 formed in the connecting portion 513.

According to an embodiment, the sensing circuit 510 (e.g., a sensing IC) may be disposed between the first portion 511 and the second portion 515 of the second substrate 320. The sensing circuit 510 may be disposed on the first surface (e.g., the upper surface in the first direction or the y-axis direction) of the first portion 511 of the second substrate 320. For example, when the second portion 515 of the second substrate 320 is bent from the first portion 511 through the connecting portion 513, the second portion 515 may be disposed above the sensing circuit 510 (e.g., in the y-axis direction). The sensing circuit 510 may receive a signal detected through the sensing pattern 550 (e.g., a touch pattern). For example, the sensing pattern 550 and the sensing circuit 510 may constitute a sensor. For example, when a touch or swipe operation is performed through the second non-conductive portion 232, the sensing pattern 550 and the sensing circuit 510 may detect a signal corresponding to the touch or swipe operation. The sensing circuit 510 may transmit a control signal corresponding to the detected signal to an external electronic device (e.g., the external electronic device 102 or 104 of FIG. 1A) using the antenna pattern 450 and the wireless communication circuit 410 disposed on the first substrate 310. For example, the sensing circuit 510 may detect at least one of a short touch, a long touch (e.g., a long press), a multi-touch, a drag, and a swipe that is input through the second non-conductive portion 232 and the sensing pattern 550, and may transmit a control signal corresponding to the detected signal to the external electronic device (e.g., the external electronic device 102 or 104 of FIG. 1A).

According to an embodiment, when a touch and/or swipe operation is performed on the second non-conductive portion 232 by a user's hand (e.g., a finger), the sensing circuit 510 and the sensing pattern 550 may detect a change in a physical quantity (e.g., a capacitance or resistance value) corresponding to the touch and/or swipe operation, and may recognize that a touch and/or swipe event has occurred. For example, the sensing circuit 510 may include the sensor module 176 illustrated in FIG. 1A. For example, the sensing circuit 510 may include a circuit for detecting a touch and/or swipe operation performed on the second non-conductive portion 232 and the sensing pattern 550. For example, the sensing circuit 510 may include any one of a proximity sensor, a pressure sensor, a grip sensor, a temperature sensor, a gesture sensor, and a touch sensor.

According to an embodiment, the wearable electronic device 200 may transmit a predetermined detection signal and/or control signal to an external electronic device 102 or 104 (e.g., a smartphone) and/or a home appliance, as illustrated in FIG. 1A. For example, when a long-press input is performed on the second non-conductive portion 232 and the sensing pattern 550 of the wearable electronic device 200 (e.g., a smart ring) by a user's finger, the sensing circuit 510 may transmit a control signal corresponding to the detected signal to an external electronic device (e.g., the external electronic devices 102 and 104 of FIG. 1A). For example, a long-press input performed on the second non-conductive portion 232 and the sensing pattern 550 may be an input configured to enter a sleep mode. For example, when a signal corresponding to the long-press input is received through the wearable electronic device 200, the external electronic device 102 or 104 (e.g., a smartphone) may transmit a control signal corresponding to the sleep mode to a paired home appliance (e.g., an IoT device). For example, the home appliance may dim lighting brightness based on the control signal received from the external electronic device 102 or 104 (e.g., a smartphone).

According to an embodiment, the wearable electronic device 200 may transmit a predetermined detection signal and/or control signal to an external electronic device 102 or 104 (e.g., a smartphone) illustrated in FIG. 1A. For example, when an input associated with a swipe operation is performed on the second non-conductive portion 232 and the sensing pattern 550 of the wearable electronic device 200 (e.g., a smart ring) by a user's finger, the sensing circuit 510 may transmit a control signal corresponding to the detected signal to an external electronic device (e.g., the external electronic device 102 or 104 of FIG. 1A). According to an example, a swipe operation performed on the second non-conductive portion 232 and the sensing pattern 550 may be an input configured for a payment service (e.g., a transportation card) using near-field communication (NFC). For example, when a signal corresponding to the swipe operation is received through the wearable electronic device 200, the external electronic device 102 or 104 (e.g., a smartphone) may provide a notification (e.g., vibration and/or sound) related to payment approval to the user. In an embodiment, although an example has been given in which a specific function (e.g., a payment service) is executed when an input associated with a swipe operation is performed through the second non-conductive portion 232 and the sensing pattern 550, a specific function or operation (e.g., a payment service) may be substantially identically executed even when a touch or press operation is performed through the second non-conductive portion 232 and the sensing pattern 550.

According to various embodiments, when a swipe operation performed through the first non-conductive portion 231 and the second non-conductive portion 232 of the wearable electronic device 200 (e.g., a smart ring) is detected by the sensing pattern 550, the sensing circuit 510 may transmit a control signal corresponding to the detected signal to an external electronic device (e.g., the external electronic device 102 or 104 of FIG. 1A). For example, a swipe operation performed on the first non-conductive portion 231, the second non-conductive portion 232, and the sensing pattern 550 may be an input configured for a payment service (e.g., a transportation card) using near-field communication (NFC). For example, when a signal corresponding to the swipe operation is received through the first non-conductive portion 231, the second non-conductive portion 232, and the sensing pattern 550 of the wearable electronic device 200, the external electronic device 102 or 104 (e.g., a smartphone) may provide a notification (e.g., vibration and/or sound) related to payment approval to the user. According to various embodiments, although an example has been described in which a specific function (e.g., a payment service) is executed when an input associated with a swipe operation is performed through the first non-conductive portion 231, the second non-conductive portion 232, and the sensing pattern 550, a specific function or operation (e.g., a payment service) may be substantially identically executed even when a touch or press operation is performed through the first non-conductive portion 231, the second non-conductive portion 232, and the sensing pattern 550.

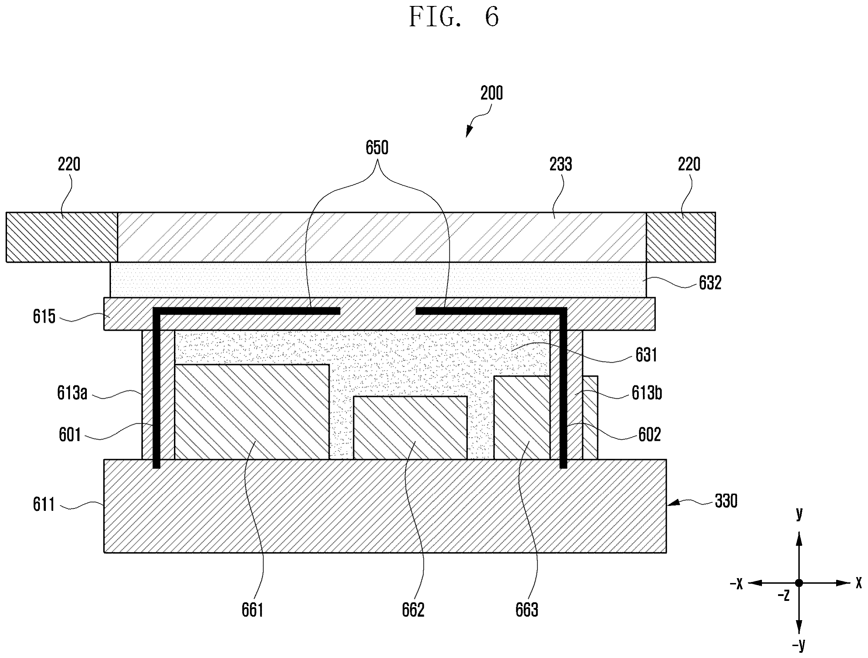

According to various embodiments, when a swipe operation performed through the second non-conductive portion 232 and the third non-conductive portion 233 of the wearable electronic device 200 (e.g., a smart ring) is detected by at least one sensing pattern (e.g., the sensing pattern 550 of FIG. 5 and/or the sensing pattern 650 of FIG. 6), the sensing circuit 510 (or the control circuit 661 of FIG. 6) may transmit a control signal corresponding to the detected signal to an external electronic device (e.g., the external electronic device 102 or 104 of FIG. 1A). For example, a swipe operation performed on the second non-conductive portion 232 and the third non-conductive portion 233 may be an input configured for a payment service (e.g., a transportation card) using near-field communication (NFC). For example, when a signal corresponding to the swipe operation is received through the second non-conductive portion 232, the third non-conductive portion 233, the sensing pattern 550, and/or the control circuit 661 illustrated in FIG. 6, the external electronic device 102 or 104 (e.g., a smartphone) may provide a notification (e.g., vibration and/or sound) related to payment approval to the user. According to various embodiments, although an example has been described in which a specific function (e.g., a payment service) is executed when an input associated with a swipe operation is performed through the second non-conductive portion 232, the third non-conductive portion 233, and at least one sensing pattern (e.g., the sensing pattern 550 of FIG. 5 and/or the sensing pattern 650 of FIG. 6), a specific function or operation (e.g., a payment service) may be substantially identically executed even when a touch or press operation is performed through the second non-conductive portion 232, the third non-conductive portion 233, and at least one sensing pattern (e.g., the sensing pattern 550 of FIG. 5 and/or the sensing pattern 650 of FIG. 6).

According to an embodiment, the third adhesive member 531 may be disposed between the second portion 515 of the second substrate 320 and the sensing circuit 510. The third adhesive member 531 may bond the second portion 515 of the second substrate 320 and the sensing circuit 510. The third adhesive member 531 may include double-sided adhesive tape, fixing PORON, adhesive resin, or an adhesive (e.g., bond). For example, the third adhesive member 531 may have a thickness ranging from about 0.03 mm to about 0.07 mm. For example, the third adhesive member 531 may be formed between the second portion 515 and the sensing circuit 510 with a thickness ranging from about 0.03 mm to about 0.07 mm.

According to an embodiment, the fourth adhesive member 532 may be disposed between the second portion 515 of the second substrate 320 and the second non-conductive portion 232. The fourth adhesive member 532 may bond the second portion 515 of the second substrate 320 and the second non-conductive portion 232 to each other. The fourth adhesive member 532 may include a transparent molded material, a double-sided adhesive tape, a fixing poron, an adhesive resin, or an adhesive (e.g., bond). For example, the fourth adhesive member 532 may have a thickness ranging from about 0.03 mm to about 0.07 mm. For example, the fourth adhesive member 532 may be formed between the second portion 515 and the second non-conductive portion 232 with a thickness ranging from about 0.03 mm to about 0.07 mm. According to various embodiments, the fourth adhesive member 532 may be selectively used or omitted. For example, when the fourth adhesive member 532 is omitted, an air gap may be formed between the second portion 515 of the second substrate 320 and the second non-conductive portion 232.

FIG. 6 is an enlarged view schematically illustrating portion C of the wearable electronic device illustrated in FIG. 3 according to an embodiment of the disclosure.

According to an embodiment, the third substrate 330 of the wearable electronic device 200 may be disposed at a position corresponding to the third non-conductive portion 233 formed on the first surface 210a of the housing 210. For example, the third substrate 330 may include a flexible substrate (e.g., a flexible printed circuit board), a rigid substrate (e.g., a rigid PCB), and/or a rigid-flexible substrate (e.g., an RF PCB).

According to an embodiment, at least one electronic component 661, 662, or 663, a fifth adhesive member 631, and/or a sixth adhesive member 632 may be disposed between the third substrate 330 and the third non-conductive portion 233. According to various embodiments, the sixth adhesive member 632 may be optionally used or omitted.

According to an embodiment, the third substrate 330 may include a first portion 611, a first connecting portion 613a, a second connecting portion 613b, and a second portion 615. At least one electronic component 661, 662, or 663 may be disposed on a first surface (e.g., the upper surface in the first direction or the y-axis direction) of the first portion 611. For example, the at least one electronic component may include at least one of a control circuit 661 (e.g., the sensing circuit 510 of FIG. 5), a capacitor 662, and an inductor 663. The first connecting portion 613a and the second connecting portion 613b may integrally connect the first portion 611 and the second portion 615. The first connecting portion 613a and the second connecting portion 613b may have predetermined lengths in a direction perpendicular to the first portion 611 (e.g., the y-axis direction). The first connecting portion 613a and the second connecting portion 613b may be disposed to be spaced apart from each other. The first connecting portion 613a may include a third wire 601 (e.g., a third signal line). For example, the third wire 601 may include at least one conductive line. The second connecting portion 613b may include a fourth wire 602 (e.g., a fourth signal line). For example, the fourth wire 602 may include at least one conductive line. For example, the first connecting portion 613a and the second connecting portion 613b may form a bending portion or a folding portion. The third substrate 330 may be bent such that the second portion 615 is bent onto the first portion 611 through the first connecting portion 613a and the second connecting portion 613b. When the third substrate 330 is bent through the first connecting portion 613a and the second connecting portion 613b, the second portion 615 may be disposed on the first portion 611. For example, the first portion 611 of the third substrate 330 may be formed as a rigid circuit board (e.g., a rigid PCB), and the first connecting portion 613a, the second connecting portion 613b, and/or the second portion 615 may be formed as a flexible printed circuit board. The second portion 615 may be bent in a direction perpendicular to the first connecting portion 613a and the second connecting portion 613b (e.g., the z-axis direction). For example, the first portion 611, the first connecting portion 613a, the second connecting portion 613b, and the second portion 615 of the third substrate 330 may be bent to have a " 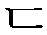 "-shaped structure. For example, the second portion 615 may be bent through the first connecting portion 613a and the second connecting portion 613b and may face the first portion 611. For example, the second portion 615 may be at least partially bent to correspond to the ring-shaped housing 210 and may face the third non-conductive portion 233. The second portion 615 may include a sensing pattern 650 (e.g., a second sensing pattern, a conductive pattern, or a touch pattern). The sensing pattern 650 (e.g., the second sensing pattern) disposed on the second portion 615 may sense and/or detect a touch or swipe operation input through the third non-conductive portion 233 formed on the first surface 210a of the housing 210. For example, the sensing pattern 650 may be formed in at least one layer. According to an embodiment, the sensing pattern 650 may be electrically connected to the first portion 611 via the third wire 601 disposed on the first connection portion 613a and the fourth wire 602 disposed on the second connection portion 613b.

In an embodiment, at least one electronic component (e.g., a control circuit 661 (e.g., the sensing circuit 510 of FIG. 5), a capacitor 662, and an inductor 663) may be disposed between the first portion 611 and the second portion 615 of the third substrate 330. For example, the at least one electronic component is not limited to the above-described examples and may further include other various passive elements (e.g., resistors). For example, the capacitor 662 may have various capacitance values, and the inductor 663 may have various inductance values. The control circuit 661 (e.g., the sensing circuit 510 of FIG. 5), the capacitor 662, and the inductor 663 may be disposed on the first surface (e.g., the upper surface in the first direction or the y-axis direction) of the first portion 611 of the third substrate 330. For example, when the second portion 615 of the third substrate 330 is bent from the first portion 611 through the first connection portion 613a and the second connection portion 613b, the second portion 615 may be disposed above (e.g., in the y-axis direction) the control circuit 661 (e.g., the sensing circuit 510 of FIG. 5), the capacitor 662, and the inductor 663. The control circuit 661 may receive a signal detected through the sensing pattern 650 (e.g., a conductive pattern). For example, the sensing pattern 650 and the control circuit 661 may constitute a sensor. For example, when a touch or swipe operation is performed through the third non-conductive portion 233, the sensing pattern 650 and the control circuit 661 may detect a signal corresponding to the touch or swipe operation. The control circuit 661 may transmit a control signal corresponding to the detected signal to an external electronic device (e.g., the external electronic device 102 or 104 of FIG. 1A) using the antenna pattern 450 and the wireless communication circuit 410 disposed on the first substrate 310. For example, the control circuit 661 may detect at least one of a short touch, a long touch (e.g., a long press), a multi-touch, a drag, and a swipe that is input through the third non-conductive portion 233 and the sensing pattern 650, and may transmit a control signal corresponding to the detected signal to the external electronic device (e.g., the external electronic device 102 or 104 of FIG. 1A).

According to an embodiment, when a touch and/or swipe operation is performed on the third non-conductive portion 233 by a user's hand (e.g., a finger), the control circuit 661 and the sensing pattern 650 may detect a change in a physical quantity (e.g., a capacitance or resistance value) corresponding to the touch and/or swipe operation, and may recognize that a touch and/or swipe event has occurred. For example, the control circuit 510 may include the sensor module 176 or the processor 120 illustrated in FIG. 1A. For example, the control circuit 661 may include a sensing circuit configured to detect touch and/or swipe operations performed on the third non-conductive portion 233 and the sensing pattern 650. For example, the control circuit 661 may perform functions and operations substantially identical to any one of a proximity sensor, a pressure sensor, a grip sensor, a temperature sensor, a gesture sensor, and a touch sensor.

According to an embodiment, the wearable electronic device 200 may transmit a predetermined detection signal and/or control signal to an external electronic device 102 or 104 (e.g., a smartphone) and/or a home appliance, as illustrated in FIG. 1A. For example, when a long-press input (e.g., a long touch) is performed by a user's finger on the third non-conductive portion 233 and the sensing pattern 650 of the wearable electronic device 200 (e.g., a smart ring), the control circuit 661 may transmit a control signal corresponding to the detected signal to the external electronic device (e.g., the external electronic device 102 or 104 of FIG. 1A). For example, a long-press input performed on the third non-conductive portion 233 and the sensing pattern 650 may be an input configured to enter a sleep mode. For example, when a signal corresponding to the long-press input is received through the wearable electronic device 200, the external electronic device 102 or 104 (e.g., a smartphone) may transmit a control signal corresponding to the sleep mode to a paired home appliance (e.g., an IoT device). For example, the home appliance may dim lighting brightness based on the control signal received from the external electronic device 102 or 104 (e.g., a smartphone).

According to an embodiment, the wearable electronic device 200 may transmit a predetermined detection signal and/or control signal to an external electronic device 102 or 104 (e.g., a smartphone) illustrated in FIG. 1A. For example, when an input associated with a swipe operation is performed on the third non-conductive portion 233 and the sensing pattern 650 of the wearable electronic device 200 (e.g., a smart ring) by a user's finger, the control circuit 661 may transmit a control signal corresponding to the detected signal to an external electronic device (e.g., the external electronic device 102 or 104 of FIG. 1A). According to an example, a swipe operation performed on the third non-conductive portion 233 and the sensing pattern 650 may be an input configured for a payment service (e.g., a transportation card) using near-field communication (NFC). For example, when a signal corresponding to the swipe operation is received through the wearable electronic device 200, the external electronic device 102 or 104 (e.g., a smartphone) may provide a notification (e.g., vibration and/or sound) related to payment approval to the user.

According to an embodiment, the fifth adhesive member 631 may be disposed between the second portion 615 of the third substrate 330 and at least one electronic component (e.g., the control circuit 661 (e.g., the sensing circuit 510 of FIG. 5), the capacitor 662, and the inductor 663). The fifth adhesive member 631 may bond the second portion 615 of the third substrate 330 and the at least one electronic component (e.g., the control circuit 661 (e.g., the sensing circuit 510 of FIG. 5), the capacitor 662, and the inductor 663). The fifth adhesive member 631 may include double-sided adhesive tape, fixing PORON, adhesive resin, or an adhesive (e.g., bond).

According to an embodiment, the sixth adhesive member 632 may be disposed between the second portion 615 of the third substrate 330 and the third non-conductive portion 2323. The sixth adhesive member 632 may bond the second portion 615 of the third substrate 330 and the third non-conductive portion 233. The sixth adhesive member 632 may include a transparent molded article, double-sided adhesive tape, fixing Poron, an adhesive resin, or an adhesive (e.g., bond). For example, the sixth adhesive member 632 may have a thickness ranging from about 0.03 mm to about 0.07 mm. For example, the sixth adhesive member 632 may be formed between the second portion 615 and the third non-conductive portion 233 with a thickness ranging from about 0.03 mm to about 0.07 mm. According to various embodiments, the sixth adhesive member 632 may optionally be used or omitted. For example, when the sixth adhesive member 632 is omitted, an air gap may be formed between the second portion 615 of the third substrate 330 and the third non-conductive portion 233.

According to various embodiments, the fourth substrate 340, the fifth substrate 350, and the sixth substrate 360 illustrated in FIG. 4 may be configured substantially the same as the above-described second substrate 320 or third substrate 330. For example, the first substrate 310 illustrated in FIG. 4 is merely an example for explanation and may be disposed at a position corresponding to the second substrate 320, the third substrate 330, the fourth substrate 340, the fifth substrate 350, or the sixth substrate 360.

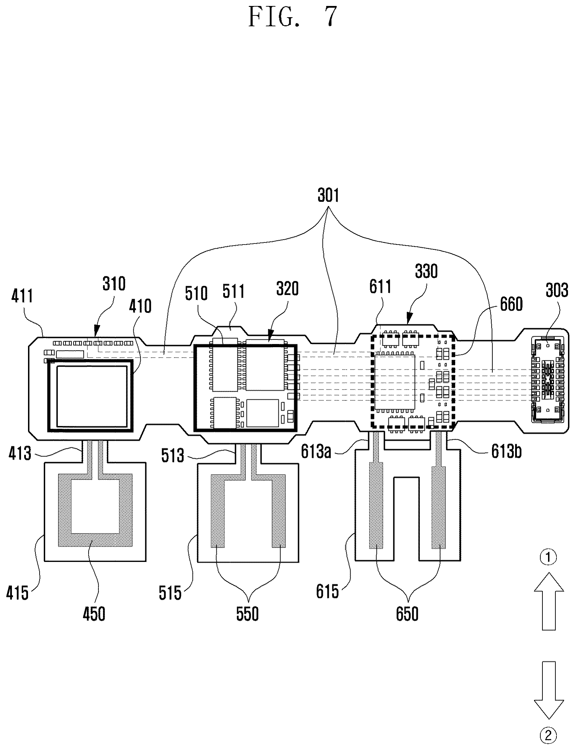

FIG. 7 is a view schematically illustrating an example in which the first to third substrates are bent in a first direction when a portion of the wearable electronic device illustrated in FIG. 3 is unfolded, according to an embodiment of the disclosure.

For example, FIG. 7 may be a view schematically illustrating a configuration in which the first substrate 310, the second substrate 320, the third substrate 330, and the connecting member 301 illustrated in FIG. 3 are unfolded.

According to an embodiment, the first substrate 310, the second substrate 320, and the third substrate 330 may be electrically connected using the connecting member 301 (e.g., an FPCB).

According to an embodiment, the first substrate 310 may include the first portion 411, the connecting portion 413, and the second portion 415. For example, through the connecting portion 413, the second portion 415 of the first substrate 310 may be bent or curved in a direction ① toward the first portion 411. For example, when the second portion 415 is bent in the direction ① toward the first portion 411, the second portion 415 may be disposed on the wireless communication circuit 410 and may be disposed to face the first portion 411.

According to an embodiment, the second substrate 320 may include the first portion 511, the connecting portion 513, and the second portion 515. For example, through the connecting portion 513, the second portion 515 of the second substrate 320 may be bent or curved in the direction ① toward the first portion 511. For example, when the second portion 515 is bent in the direction ① toward the first portion 511, the second portion 515 may be disposed on the sensing circuit 510 and may be disposed to face the first portion 511.

According to an embodiment, the third substrate 330 may include the first portion 611, the first connecting portion 613a, the second connecting portion 613b, and the second portion 615. For example, through the first connecting portion 613a and the second connecting portion 613b, the second portion 615 of the third substrate 330 may be bent or curved in the first direction ① toward the first portion 611. For example, when the second portion 615 is bent in the direction ① toward the first portion 611, the second portion 615 may be disposed on at least one electronic component 660 and may be disposed to face the first portion 611. For example, the at least one electronic component 660 may include the control circuit 661, the capacitor 662, and/or the inductor 663 illustrated in FIG. 6.

According to an embodiment, although a case in which the second portion 415 of the first substrate 310 is bent in the direction ① toward the first portion 411 through the connecting portion 413, the second portion 515 of the second substrate 320 is bent in the direction ① toward the first portion 511 through the connecting portion 513, and the third substrate 330 is bent in the direction ① toward the first portion 611 through the first connecting portion 613a and the second connecting portion 613b has been described in the embodiment illustrated in FIG. 7, the disclosure is not limited thereto.

According to various embodiments, the first substrate 310 may be bent or curved in a direction ② opposite to the direction ①, such that the second portion 415 of the first substrate 310 is bent toward the first portion 411 through the connecting portion 413. For example, when the second portion 415 is bent in the direction ② toward the first portion 411, the second portion 415 may be disposed on the wireless communication circuit 410 and may be disposed to face the first portion 411.

According to various embodiments, the second substrate 320 may be bent or curved in the second direction ② opposite to the first direction ①, such that the second portion 515 of the second substrate 320 is bent toward the first portion 511 through the connecting portion 513. For example, when the second portion 515 is bent in the direction ② toward the first portion 511, the second portion 515 may be disposed on the sensing circuit 510 and may be disposed to face the first portion 511.

According to an embodiment, the third substrate 330 may be bent or curved in the second direction ② opposite to the first direction ①, such that the second portion 615 of the third substrate 330 is bent toward the first portion 611 through the first connecting portion 613a and the second connecting portion 613b. For example, when the second portion 615 is bent in the direction ② toward the first portion 611, the second portion 615 may be disposed on at least one electronic component 660 and may be disposed to face the first portion 611.

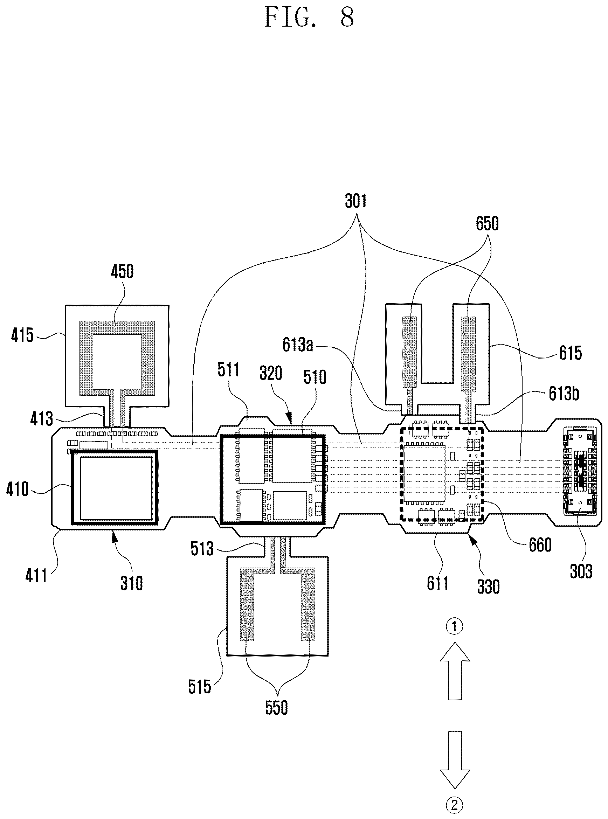

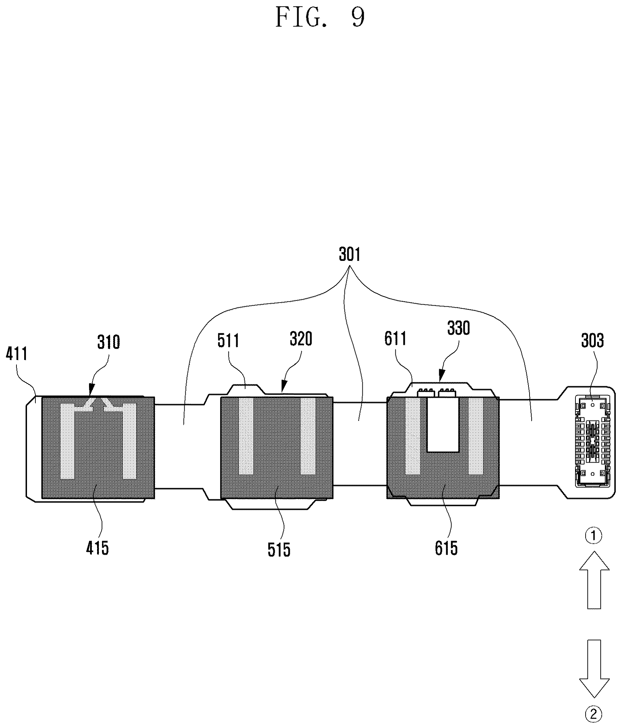

FIG. 8 is a view schematically illustrating an example in which a portion of the wearable electronic device illustrated in FIG. 3 is unfolded and the first to third substrates are bent in a first direction or a second direction, according to an embodiment of the disclosure. FIG. 9 is a view schematically illustrating a state in which the first substrate to the third substrate are bent, according to an embodiment of the disclosure.

For example, FIG. 8 may be a view schematically illustrating a configuration in which the first substrate 310, the second substrate 320, the third substrate 330, and the connecting member 301 illustrated in FIG. 3 are unfolded. For example, FIG. 9 may be a view schematically illustrating a state in which the second portions 415, 515, and 615 of the first substrate 310, the second substrate 320, and the third substrate 330 are bent toward the first portions 411, 511, and 611.

According to an embodiment, the first substrate 310, the second substrate 320, and the third substrate 330 may be electrically connected using the connecting member 301 (e.g., an FPCB).

According to an embodiment, the first substrate 310 may include the first portion 411, the connecting portion 413, and the second portion 415. For example, the second portion 415 of the first substrate 310 may be bent or curved in the direction ② toward the first portion 411 through the connecting portion 413. For example, when the second portion 415 is bent in the direction ② toward the first portion 411, the second portion 415 may be disposed on the wireless communication circuit 410 and may be disposed to face the first portion 411.

According to an embodiment, the second substrate 320 may include the first portion 511, the connecting portion 513, and the second portion 515. For example, through the connecting portion 513, the second portion 515 of the second substrate 320 may be bent or curved in the direction ① toward the first portion 511. For example, when the second portion 515 is bent in the direction ① toward the first portion 511, the second portion 515 may be disposed on the sensing circuit 510 and may be disposed to face the first portion 511.

According to an embodiment, the third substrate 330 may include the first portion 611, the first connecting portion 613a, the second connecting portion 613b, and the second portion 615. For example, through the first connecting portion 613a and the second connecting portion 613b, the second portion 615 of the third substrate 330 may be bent or curved in the first direction ② toward the first portion 611. For example, when the second portion 615 is bent in the direction ② toward the first portion 611, the second portion 615 may be disposed on at least one electronic component 660 and may be disposed to face the first portion 611.

According to an embodiment, although a case in which the second portion 415 of the first substrate 310 is bent in the direction ② toward the first portion 411 through the connecting portion 413, the second portion 515 of the second substrate 320 is bent in the direction ① toward the first portion 511 through the connecting portion 513, and the third substrate 330 is bent in the direction ② toward the first portion 611 through the first connecting portion 613a and the second connecting portion 613b has been described in the embodiment illustrated in FIG. 8, the disclosure is not limited thereto.

According to various embodiments, the second portion 415 of the first substrate 310 may be bent in the direction ① toward the first portion 411 through the connecting portion 413, the second portion 515 of the second substrate 320 may be bent in the direction ② toward the first portion 511 through the connecting portion 513, and the third substrate 330 may be bent in the direction ① toward the first portion 611 through the first connecting portion 613a and the second connecting portion 613b.

According to various embodiments, as long as the second portion 415 of the first substrate 310 is bent and disposed to face the first portion 411, the second portion 515 of the second substrate 320 is bent and disposed to face the first portion 511, and the second portion 615 of the third substrate 330 is bent and disposed to face the first portion 611, it may not matter whether the first substrate 310, the second substrate 320, and the third substrate 330 are bent in either the direction ① or the direction ②.

Referring to FIG. 9, the second portion 415 of the first substrate 310 may be bent in the direction ② toward the first portion 411 through the connecting portion 413 and may be disposed to face the first portion 411. For example, the second portion 515 of the second substrate 320 may be bent in the direction ② toward the first portion 511 through the connecting portion 513 and may be disposed to face the first portion 511. For example, the second portion 615 of the third substrate 330 may be bent in the direction ② toward the first portion 611 through the first connecting portion 613a and the second connecting portion 613b and may be disposed to face the first portion 611.

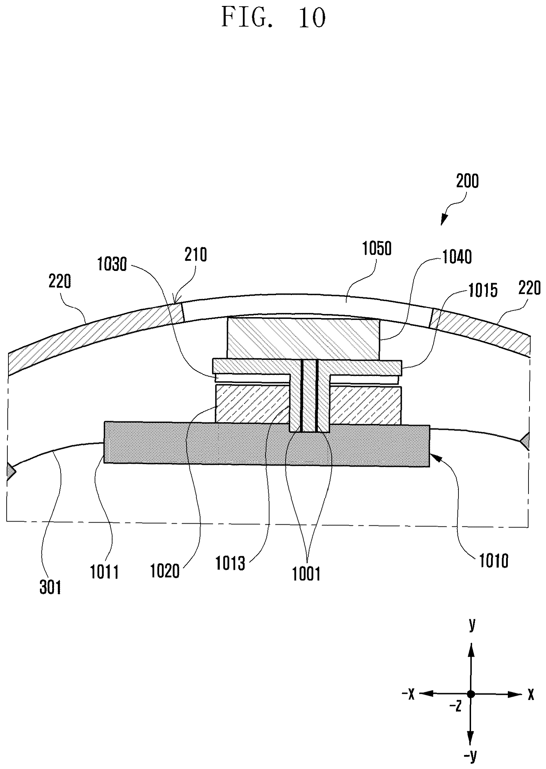

FIG. 10 is an enlarged view schematically illustrating a portion of a wearable electronic device according to various embodiments of the disclosure.

For example, FIG. 10 may be an enlarged view schematically illustrating various embodiments of portion B of the wearable electronic device illustrated in FIG. 3.

According to various embodiments, the embodiments illustrated in FIGS. 2 to 9 may be substantially equally applied to the wearable electronic device 200 illustrated in FIG. 10. For example, the embodiments illustrated in FIGS. 1A to 9 may be substantially equally applied to and integrated into the wearable electronic device 200 illustrated in FIG. 10.

According to an embodiment, the housing 210 (e.g., the first surface 201a of FIG. 3) may include a conductive portion 220 and a window portion 1050. For example, the window portion 1050 may be formed of a transparent material.

According to an embodiment, the substrate 1010 of the wearable electronic device 200 may be disposed at a position corresponding to the window portion 1050 formed on the first surface 210a of the housing 210. For example, the substrate 1010 may include a flexible substrate (e.g., a flexible printed circuit board), a rigid substrate (e.g., a rigid PCB), and/or a rigid-flexible substrate (e.g., an RF PCB).

According to an embodiment, a sensing circuit 1020, an adhesive member 1030, and/or an optical sensor 1040 may be disposed between the substrate 1010 and the window portion 1050.

According to an embodiment, the substrate 1010 may include a first portion 1011, a connecting portion 1013, and a second portion 1015. The sensing circuit 1020 may be disposed on the first surface (e.g., the upper surface in the first direction or the y-axis direction) of the first portion 1011. The connecting portion 1013 may integrally connect the first portion 1011 and the second portion 1015. The connecting portion 1013 may have a predetermined length in a direction perpendicular to the first portion 511 (e.g., the y-axis direction). According to an embodiment, the connecting portion 1013 may include a wire 1001 (e.g., a signal line). For example, the wire 1001 may include at least one conductive line. For example, the connecting portion 1013 may form a bending portion or a folding portion. The substrate 1010 may be bent or curved from the first portion 1011 toward the second portion 1015 through the connecting portion 1013. When the substrate 1010 is bent through the connecting portion 1013, the second portion 1015 may be disposed on the first portion 1011. For example, the first portion 1011 of the substrate 1010 may be formed as a rigid substrate (e.g., a rigid PCB), and the connecting portion 1013 and/or the second portion 1015 may be formed as a flexible substrate (e.g., a flexible printed circuit board). The second portion 1015 may be bent in a direction perpendicular to the connecting portion 1013 (e.g., in the z-axis direction). For example, the first portion 1011, the connecting portion 1013, and the second portion 1015 of the substrate 1010 may be bent or curved such that they have a " 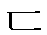 "-shaped structure. For example, the second portion 1015 may be bent through the connecting portion 1013 and may face the first portion 1011.

According to an embodiment, the sensing circuit 1020 (e.g., a sensing IC) may be disposed between the first portion 1011 and the second portion 1015 of the substrate 1010. The sensing circuit 1020 may be disposed on the first surface (e.g., the upper surface in the first direction or the y-axis direction) of the first portion 1011 of the substrate 1010. For example, when the second portion 1015 of the substrate 1010 is bent onto the first portion 1011 through the connecting portion 1013, the second portion 1015 may be disposed above the sensing circuit 1020 (e.g., in a y-axis direction). The sensing circuit 1020 may receive a signal detected through the optical sensor 1040 disposed on the second portion 1015.

According to an embodiment, the adhesive member 1030 may be disposed between the second portion 1015 of the substrate 1010 and the sensing circuit 1020. The adhesive member 1030 may bond the second portion 1015 of the substrate 1010 and the sensing circuit 1020 to each other. The adhesive member 1030 may include a double-sided adhesive tape, a fixing poron, an adhesive resin, or an adhesive (e.g., bond).

According to an embodiment, the optical sensor 1040 may be disposed between the window portion 1050 and the second portion 1015 of the substrate 1010. The optical sensor 1040 may be electrically connected to the sensing circuit 1020 and/or the substrate 1010 via the wire 1001 (e.g., a signal line) formed in the connecting portion 1013. For example, the optical sensor 1040 may be configured such that at least a portion of light output from a light-emitting unit (e.g., an LED) is reflected from an external object (e.g., a finger) and detected by a light-receiving unit (e.g., a photodiode). For example, the wearable electronic device 200 may acquire biometric information such as a user's heart rate, stress, and blood oxygen saturation using the optical sensor 1040. According to various embodiments, the optical sensor 1040 may include a fingerprint sensor. According to various embodiments, the optical sensor 1040 may include an infrared (IR) sensor, a biometric sensor, a temperature sensor, or an illuminance sensor.

According to various embodiments, the window portion 1050 illustrated in FIG. 10 may be applied to at least one of the first non-conductive portion 231, the second non-conductive portion 232, the third non-conductive portion 233, the fourth non-conductive portion 234, the fifth non-conductive portion 235, and the sixth non-conductive portion 236 illustrated in FIG. 3. For example, at least one of the first non-conductive portion 231, the second non-conductive portion 232, the third non-conductive portion 233, the fourth non-conductive portion 234, the fifth non-conductive portion 235, and the sixth non-conductive portion 236 illustrated in FIG. 3 may include the window portion 1050 illustrated in FIG. 10 or may be replaced with the window portion 1050.

According to an embodiment of the disclosure, a wearable electronic device 200 may include a housing 210 having a ring shape, a first non-conductive portion 231 formed on a first surface of the housing 210, and a first substrate 310 disposed at a position corresponding to the first non-conductive portion 231 in an internal space of the housing 210. According to an embodiment, the first substrate 310 may include a first portion 411, a connecting portion 413, and a second portion 415. According to an embodiment, the wearable electronic device 200 may include a wireless communication circuit 410 disposed on the first portion 411 and an antenna pattern 450 disposed on the second portion 415. According to an embodiment, the second portion 415 may be bent through the connecting portion 413 and may be disposed on the wireless communication circuit 410.

According to an embodiment, the connecting portion 413 may include a first wire 401, and the antenna pattern 450 and the first portion 411 may be electrically connected to each other via the first wire 401.

According to an embodiment, the wearable electronic device 200 may further include a shielding member 420 disposed on the wireless communication circuit 410.

According to an embodiment, the wearable electronic device 200 may further include a first adhesive member 431 disposed between the second portion 415 and the shielding member 420.

According to an embodiment, the wearable electronic device 200 may further include a second adhesive member 432 disposed between the first non-conductive portion 231 and the second portion 415.

According to an embodiment, the wearable electronic device 200 may further include a second non-conductive portion 232 formed on the first surface of the housing 210, a second substrate 320 disposed at a position corresponding to the second non-conductive portion 232 in an internal space of the housing 210, a first portion 511, a connecting portion 513, and a second portion 515 that form the second substrate 320, a sensing circuit 510 disposed on the first portion 511, and a first sensing pattern 550 disposed on the second portion 515. According to an embodiment, the second portion 515 may be bent through the connecting portion 513 and may be disposed on the sensing circuit 510.

According to an embodiment, the connecting portion 513 may include a second wire 501, and the first sensing pattern 550 and the first portion 511 may be electrically connected to each other through the second wire 501.

According to an embodiment, the first sensing pattern 550 and the sensing circuit 510 may be configured to detect a touch or swipe operation through the second non-conductive portion 232.

According to an embodiment, the wearable electronic device 200 may further include a third adhesive member 531 disposed between the second portion 515 and the sensing circuit 510.

According to an embodiment, the wearable electronic device 200 may further include a fourth adhesive member 532 disposed between the second non-conductive portion 232 and the second portion 515.

According to an embodiment, the wearable electronic device 200 may further include a third non-conductive portion 233 formed on the first surface of the housing 210, a third substrate 330 disposed at a position corresponding to the third non-conductive portion 233 in an internal space of the housing 210, a first portion 611, a first connecting portion 613a, a second connecting portion 613b, and a second portion 615 that form the third substrate 330, at least one electronic component 660 disposed on the first portion 611, and a second sensing pattern 650 disposed on the second portion 615. According to an embodiment, the second portion 615 may be bent through the first connecting portion 613a and the second connecting portion 613b and may be disposed on the at least one electronic component 660.

According to an embodiment, the first connecting portion 613a may include a third wire 601, the second connecting portion 613b may include a fourth wire 602, and the second sensing pattern 650 and the first portion 611 may be electrically connected to each other via the third wire 601 and the fourth wire 602.

According to an embodiment, the at least one electronic component 660 may include at least one passive element.

According to an embodiment, the wearable electronic device 200 may further include a fifth adhesive member 631 disposed between the second portion 615 and the at least one electronic component 660.

According to an embodiment, the wearable electronic device 200 may further include a sixth adhesive member 632 disposed between the third non-conductive portion 233 and the second portion 615.

According to an embodiment, the first substrate 310, the second substrate 320, and the third substrate 330 may be electrically connected to each other via a connecting member 301.

According to an embodiment, an internal space of the housing 210 may be filled with a non-conductive molded body 308.

According to an embodiment, the wearable electronic device 200 may further include a wireless-charging antenna 305 and a battery 189 disposed in an internal space of the housing 210, and the wireless-charging antenna 305 and the battery 189 may be electrically connected to the connecting member 301 via a connector 303.

According to an embodiment, the first portion 411 may be formed of a rigid substrate, and the connecting portion 413 and/or the second portion 415 may be formed of a flexible substrate.

According to an embodiment, the first non-conductive portion 231 or the second non-conductive portion 232 may include a transparent window portion 1050.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

According to various embodiments, each element (e.g., module or program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of an embodiment of the disclosure should be construed to, in addition to the embodiments set forth herein, include various modifications and changes.

## Claims

1. A wearable electronic device (200) comprising:
a housing (210) having a ring shape;
a first non-conductive portion (231) formed on a first surface of the housing (210);
a first substrate (310) disposed at a position corresponding to the first non-conductive portion (231) in an internal space of the housing (210);
a first portion (411), a connecting portion (413), and a second portion (415) that form the first substrate (310);
a wireless communication circuit (410) disposed on the first portion (411); and
an antenna pattern (450) disposed on the second portion (415),
wherein the second portion (415) is bent through the connecting portion (413) and is disposed on the wireless communication circuit (410).

2. The wearable electronic device of claim 1, wherein the connecting portion (413) comprises a first wire(401), and
wherein the antenna pattern (450) and the first portion (411) are electrically connected to each other via the first wire (401).

3. The wearable electronic device of claim 1 or 2, further comprising:
a shielding member (420) disposed on the wireless communication circuit (410).

4. The wearable electronic device of claim 3, further comprising:
a first adhesive member (431) disposed between the second portion (415) and the shielding member (420).

5. The wearable electronic device of any one of claims 1 to 4, further comprising:
a second adhesive member (432) disposed between the first non-conductive portion (231) and the second portion (415).

6. The wearable electronic device of any one of claims 1 to 5, further comprising:
a second non-conductive portion (232) formed on the first surface of the housing (210);
a second substrate (320) disposed at a position corresponding to the second non-conductive portion (232) in the internal space of the housing (210);
a first portion (511), a connecting portion (513), and a second portion (515) that form the second substrate (320);
a sensing circuit (510) disposed on the first portion (511); and
a first sensing pattern (550) disposed on the second portion (515),
wherein the second portion (515) is bent through the connecting portion (513) and is disposed on the sensing circuit (510).

7. The wearable electronic device of claim 6, wherein the connecting portion (513) comprises a second wire (501), and
wherein the first sensing pattern (550) and the first portion (511) are electrically connected to each other via the second wire (501).

8. The wearable electronic device of claim 6, wherein the first sensing pattern (550) and the sensing circuit (510) are configured to detect a touch or swipe operation through the second non-conductive portion (232).

9. The wearable electronic device according to claim 6, further comprising:
a third adhesive member (531) disposed between the second portion (515) and the sensing circuit (510); and
a fourth adhesive member (532) disposed between the second non-conductive portion (232) and the second portion (515).

10. The wearable electronic device of claim 1, further comprising:
a third non-conductive portion (233) formed on the first surface of the housing (210);
a third substrate (323) disposed at a position corresponding to the third non-conductive portion (233) in the internal space of the housing (210);
a first portion (611), a first connecting portion (613a), a second connecting portion (613b), and a second portion (615) that form the third substrate (323);
at least one electronic component (660) disposed on the first portion (611); and
a second sensing pattern (650) disposed on the second portion (615),
wherein the second portion (615) is bent through the first connecting portion (613a) and the second connecting portion (613b) and is disposed on the at least one electronic component (660).

11. The wearable electronic device of claim 10, wherein the first connecting portion (613a) comprises a third wire (601), and the second connecting portion (613b) comprises a fourth wiring (602), and
wherein the second sensing pattern (650) and the first portion (611) are electrically connected to each other via the third wire (601) and the fourth wire (602).

12. The wearable electronic device according to claim 11, further comprising:
a fifth adhesive member (631) disposed between the second portion (615) and the at least one electronic component (660); and
a sixth adhesive member (632) disposed between the third non-conductive portion (233) and the second portion (615).

13. The wearable electronic device of claim 11, wherein the first substrate (310), the second substrate (320), and the third substrate (330) are electrically connected to each other via a connecting member (301), and
wherein the internal space of the housing (210) is filled with a non-conductive molded body (308).

14. The wearable electronic device according to claim 13, further comprising:
a wireless-charging antenna (305) and a battery (189) disposed in an internal space of the housing (210),
wherein the wireless-charging antenna (305) and the battery (189) are electrically connected to the connecting member (301) via a connector (303).

15. The wearable electronic device of any one of claims 1 to 5, wherein the first portion (411) is formed of a rigid substrate, and the connecting portion (413) and/or the second portion (415) is formed of a flexible substrate.
